**Europäisches Patentamt**

**European Patent Office**

**Office européen des brevets**

(19)

(11) Veröffentlichungsnummer: **0 196 141**

**A2**

(12) # EUROPÄISCHE PATENTANMELDUNG

(21) Anmeldenummer: **86200491.8**

(22) Anmeldetag: **21.03.86**

(51) Int. Cl.⁴: **H04Q 3/00** , H04M 7/00

(30) Priorität: **29.03.85 DE 3511431**

(43) Veröffentlichungstag der Anmeldung:
**01.10.86 Patentblatt 86/40**

(84) Benannte Vertragsstaaten:
**AT BE CH DE FR GB IT LI NL**

(71) Anmelder: **Philips Patentverwaltung GmbH**
**Billstrasse 80**
**D-2000 Hamburg 28(DE)**
Anmelder: **N.V. Philips' Gloeilampenfabrieken**
**Groenewoudseweg 1**
**NL-5621 BA Eindhoven(NL)**

(72) Erfinder: **Maisel, Manfred, Dipl.-Ing.**
**An der Leithe 9**
**D-8551 Igensdorf(DE)**
Erfinder: **Borutta, Herbert, Dipl.-Ing. (FH)**
**Blütenstrasse 6**
**D-8501 Eckental(DE)**
Erfinder: **Bauer, Uwe, Dipl.-Ing.**
**Föhrenstrasse 47 a**
**D-8501 Eckental(DE)**

(74) Vertreter: **Dreykorn-Lindner, Werner et al**
**Philips Patentverwaltung GmbH Postfach 10 51 49**
**Billstrasse 80**
**D-2000 Hamburg 28(DE)**

(54) **Verfahren und Schaltungsanordnung zur Wegeauswahl in einem Fernmeldenetz.**

(57) In militärischen Fernmeldenetzen wird ein funktionsorientiertes Rufnummernschema unabhängig von der Netztopologie verwendet. Da sich die Netzstruktur in einem militarischen Fernmeldenetz ständig ändern und der Teilnehmer jederzeit umziehen kann, ist es notwendig alle möglichen Verbindungswege im Fernmeldenetz auf der Suche nach dem gerufenen Teilnehmer durchzuschalten. Um den Verbindungsaufbau schnell durchführen zu können, werden ausgehend von der Vermittlungsstelle des rufenden Teilnehmers zu allen an diese Vermittlungsstelle angeschlossenen Vermittlungsstellen Verbindungsaufbaumeldungen ausgesandt (paralleles Zielsuchverfahren).

Zur Verringerung der Verkehrsbelastung in den Vermittlungsstellen und zur Verkürzung der Verbindungsaufbauzeiten wird in allen Vermittlungsstellen VSt beim Eintreffen einer Verbindungsaufbaumeldung V ein Zeitglied Z gestartet. Nach Ablauf der Verzögerungszeit wird die gespeicherte Verbindungsaufbaumeldung V wieder gelöscht. In der Vermittlungsstelle VSt des gerufenen Teilnehmers wird nur die zuerst eintreffende Verbindungsaufbaumeldung V für die Herstellung einer Verbindung zur rufenden Teilnehmerstelle herangezogen. Während der Verzögerungszeit des Zeitglieds Z in der Vermittlungsstelle VSt eintreffende weitere Verbindungsaufbaumeldungen V werden nicht gespeichert.

FIG. 3

## Verfahren und Schaltungsanordnung zur Wegeauswahl in einem Fernmeldenetz

Die Erfindung betrifft ein Wegeauswahlverfahren in einem Fernmeldenetz gemäß dem Oberbegriff des Patentanspruchs 1.

Bei militärischen Fernmeldenetzen ist die Fexibilität der Netztopologie und der Teilnehmerdislozierung von großer taktischer Bedeutung. Um ein solches Fernmeldenetz nicht mit einer Vielzahl von Netzwerkmanagment-Aufgaben zu überlasten, kann kein hierarchisches, vom Kennzahlenweg geprägtes, deterministisches Wegeauswahlverfahren benutzt werden. Aus der DE-AS 17 62 807 ist ein Verfahren zum Suchen freier Verbindungswege in einem Fernmeldenetz bekannt, bei dem Suchmeldungen "-schneeballartig" (paralleles Zielsuchverfahren) über die die Vermittlungsstellen miteinander verbindenden Verbindungsleitungen übertragen werden, wenn der gerufene Teilnehmer einer anderen Vermittlungsstelle zugeordnet ist. Die Suchmeldungen (Vorwärtsmeldungen) werden in jeder Vermittlungsstelle gespeichert und falls der gerufene Teilnehmer dieser Vermittlungsstelle nicht zugeordnet ist, werden von dieser Vermittlungsstelle ausgehend Vorwärtsmeldungen zu allen daran angeschlossenen Vermittlungsstellen übertragen.

Bei dem bekannten Verfahren werden also über alle möglichen Verbindungswege im Fernmeldenetz Vorwärtsmeldungen übertragen, so daß auch ein Teilnehmer, welcher umgezogen ist (so daß der Standort dieser Teilnehmereinrichtung vor dem Verbindungsaufbau nicht bekannt ist) gefunden werden kann. Dadurch kann auch in einem militärischen Fernmelde netz, in welchem sich die Netzstruktur ständig verändert, der Verbindungsaufbau durchgeführt werden. Andererseits wird die Verkehrsbelastung der Vermittlungseinrichtungen bei Anwendung des bekannten Verfahrens erhöht.

Der Erfindung liegt die Aufgabe zugrunde, ein aus der DE-AS 17 62 807 bekanntes Wegeauswahlverfahren derart weiterzubilden, daß die Verkehrsbelastung in den Vermittlungsstellen verringert und die Verbindungsaufbauzeiten verkürzt werden können.

Diese Aufgabe wird durch ein Wegeauswahlverfahren gemäß dem Patentanspruch 1 gelöst.

Das erfindungsgemäße Verfahren weist die Vorteile auf, daß der Speicheraufwand in den einzelnen Vermittlungsstellen für die Speicherung der Verbindungsaufbaumeldungen (Vorwärtsmeldungen oder Suchmeldungen) verringert werden kann und daß der kürzeste und freie Verbindungsweg im Fernmeldenetz auf einfache Art und Weise gefunden werden kann.

Bereits vorhandene Einrichtungen, wie z.B. eine Steuereinrichtung oder ein Speicher, können für die Schaltungsanordnung zur Durchführung des Verfahrens mit benutzt werden. Als zusätzlicher Schaltungsaufwand ist lediglich ein Zeitglied erforderlich.

Die Erfindung wird im folgenden anhand der in der Zeichnung dargestellten Ausführungsform näher beschrieben und erläutert. Es zeigt:

Fig. 1 die Struktur des Fernmeldenetzes,

Fig. 2 das Ablaufdiagramm des erfindungsgemäßen Verfahrens und

Fig. 3 eine Ausführungsform für eine Schaltungsanordnung zur Durchführung des erfindungsgemäßen Verfahrens.

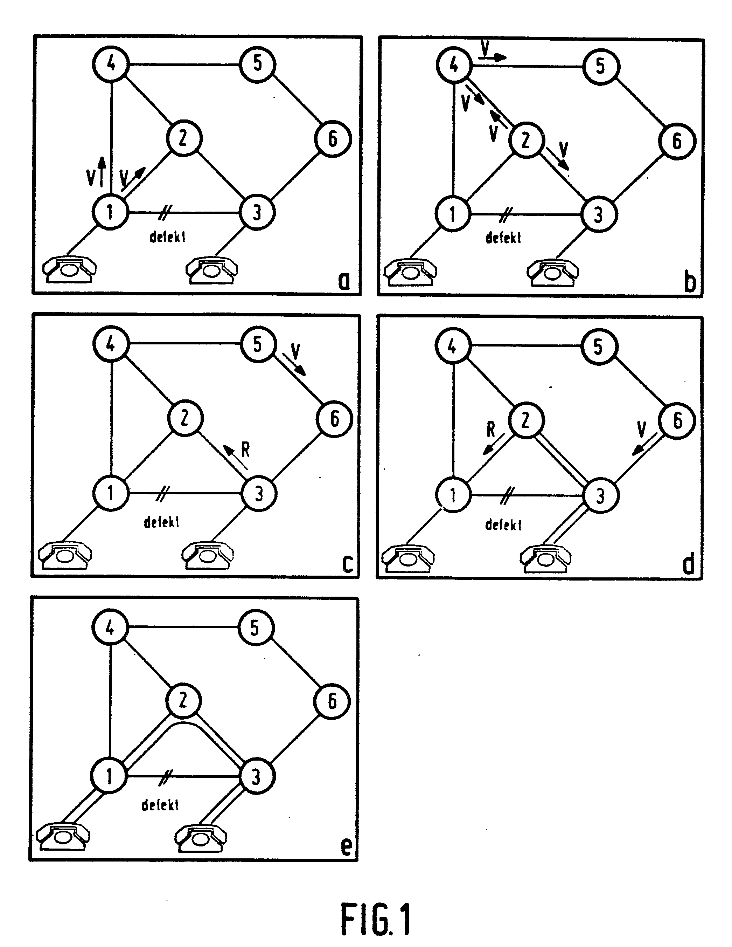

Fig. 1 zeigt die Netztopologie eines militärischen Fernmeldenetzes mit über Verbindungsleitungen miteinander verbundenen Vermittlungsstellen. In einem solchen Fernmeldenetz wird ein funktionsorientiertes Rufnummernschema unabhängig von der Netztopologie verwendet und der Verbindungsaufbau von der Vermittlungsstelle des rufenden Teilnehmers (A-Teilnehmer) ausgehend erfolgt unter Anwendung eines parallelen Zielsuchverfahrens. Im Fernmeldenetz wer en für die Signalisierung drei verschiedene Meldungen verwendet, nämlich Verbindungsaufbaumeldungen V (auch Vorwärtsmeldungen oder Suchmeldungen genannt), Rückwärtsmeldungen R und Auslösemeldungen. Von der Vermittlungsstelle des A-Teilnehmers, auch Startknoten genannt werden Verbindungsaufbaumeldungen V durch das Fernmeldenetz zur Vermittlungsstelle -(Zielknoten) des gerufenen Teilnehmers (B-Teilnehmer) gesendet. Wird der Zielknoten (Knoten des B-Teilnehmers) gefundene, so wird mittels einer Rückwärtsmeldung R, über den gefundenen Weg in Gegenrichtung übertragen, abschnittsweise von Knoten zu Knoten ein Sprechkanal belegt und die Verbindung aufgebaut. Ist das Gespräch beendet, so sendet die Teilnehmereinrichtung des auslösenden Teilnehmers eine Auslösemeldung, die abschnittsweise die belegten Sprechkanäle wieder frei gibt.

Im folgenden wird der Verbindungsaufbau zwischen dem A-Teilnehmer, angeschlossen an den Knoten 1, und dem B-Teilnehmer, angeschlossen am Knoten 3, näher beschrieben. Um eine Verbindung zum B-Teilnehmer herzustellen, wählt der A-Teilnehmer die Rufnummer des B-Teilnehmers, welche zum Knoten 1 über die Teilnehmerleitung übertragen wird.

Die im Knoten 1 angeordnete Steuereinrichtung wertet die Rufnummer des B-Teilnehmers aus, wodurch festgestellt wird, daß eine Externverbindung erforderlich ist. Ausgehend vom Knoten 1 werden Vorwärtsmeldungen V zu allen an diesen Knoten 1 angeschlossenen Knoten (beim Ausführungsbeispiel die Knoten 2 und 4) ausgesandt. Gleichzeitig wird im Knoten 1 die Vorwärtsmeldung V in einem Speicher abgelegt. Die Knoten 2 und 4 -(Umwegknoten) stellen nach Prüfung der Vorwärtsmeldung V fest, daß sich der gesuchte Teilnehmer nicht in ihrem Anschlußbereich befindet und leiten die Vorwärtsmeldungen V wieder in alle möglichen Richtungen, mit Ausnahme der Empfangsrichtung, weiter. Beim Eintreffen der Vorwärtsmeldung V wird in den Knoten 2 und 4 ein Zeitglied gestartet und die im Knoten 2 und 4 gespeicherte Vorwärtsmeldung V wird nach Ablauf der Verzögerungszeit wieder gelöscht.

Die Knoten 2 und 4 senden über die Verbindungsleitungen zu allen angeschlossenen Knoten Vorwärtsmeldungen V, wodurch die Vorwärtsmeldungen V ausgehend von Knoten 2 den Zielknoten 3 (Knoten des B-Teilnehmers) erreicht. Diese erste Vorwärtsmeldung V wird im Zielknoten 3 gespeichert und das Zeitglied im Knoten 3 wird gestartet. Der Knoten 3 sendet nun zum Knoten 2 eine Rückwärtsmeldung R, während zwischen Knoten 5 und 6 über die Verbindungsleitungen eine Vorwärtsmeldung V übertragen wird. Gleichzeitig mit der Rückwärtsmeldung R wird der jeweilige Streckenabschnitt geschaltet. Voraussetzung hierfür ist, daß der B-Teilnehmer frei ist.

Die zwischen Knoten 2 und 4 in beiden Richtungen übertragenen Vorwärtsmeldungen V werden während der Laufzeit des Zeitglieds gelöscht, da es sich nicht mehr um die zuerst eintreffende Vorwärtsmeldung V handelt. Die vom Knoten 3 zum Knoten 2 gesendete Rückwärtsmeldung R wird vom Knoten 2 über den glei-

chen Weg wie die Vorwärtsmeldung V zum Startknoten 1 zurückübertragen, ein Sprechkanal belegt und die Verbindung aufgebaut. Während der Übertragung der Rückwärtsmeldung R vom Knoten 2 zum Knoten 1 trifft im Knoten 3 die vom Knoten 6 ausgesandte Vorwärtsmeldung V ein. Diese über dem Umweg des Knoten 6 eintreffende spätere Vorwärtsmeldung wird nicht gespeichert, so daß durch das erfindungsgemäße Wegeauswahlverfahren die Netzbelastung in den Vermittlungsstellen (Knoten) verringert werden kann.

Dem vorstehend geschilderten Verbindungsaufbau liegt die Annahme zugrunde, daß die Verbindungsleitung zwischen Knoten 1 und Knoten 3 unterbrochen ist. Die Vorwärtsmeldungen V würden in der geschilderten Reihenfolge auch dann übertragen werden, wenn alle Verbindungsleitungen des Bündels zwischen Knoten 1 und Knoten 3 belegt wären, so daß über diesen Weg ohnehin keine Verbindung aufgebaut werden könnte (Blockierung). Dies gilt jedoch nicht für Rufe mit hoher Priorität, da hierbei Verbindungen niedrigerer Priorität abgebrochen werden. Das in Fig. 1 dargestellte Fernmeldenetz weist drei verschiedene Netzknotentypen auf, nämlich Startknoten, Durchgangs-oder Transitknoten und Zielknoten.

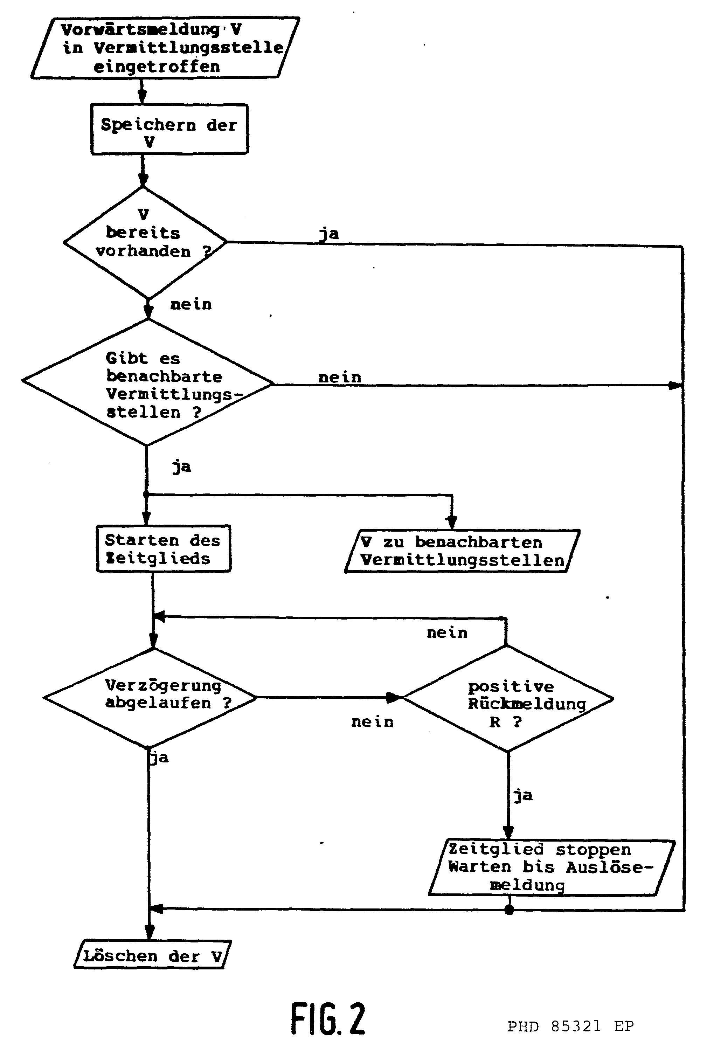

Anhand Fig. 2 wird die Verarbeitung einer Vorwärtsmeldung V in einem Transitknoten näher erläutert. Trifft die Vorwärtsmeldung V im Transitknoten ein, so wird diese zwischengespeichert und geprüft, ob die Vorwärtsmeldung V die erste Vorwärtsmeldung ist. Ist dies der Fall, so prüft eine Steuereinrichtung im Transitknoten, ob es sich um einen Knoten ohne benachbarte Knoten handelt. Ist dies der Fall, so wird die Vorwärtsmeldung V nicht weitergespeichert, da über keinen anderen Verbindungsweg mehr eine Vorwärtsmeldung V zu diesem Transitknoten gelangen kann. Handelt es sich dagegen um einen Knoten mit benachbarten Knoten, so bleibt die Vorwärtsmeldung V gespeichert und ein Zeitglied gestartet. Die für die Prüfung, ob es sich um einen Knoten mit oder ohne Nachbarknoten handelt, erforderliche Bearbeitungszeit ist in Fig. 2 nicht dargestellt. Nach der Bearbeitungszeit im Transitknoten werden ausgehend von diesem Vorwärtsmeldungen V zu benachbarten Knoten gesandt, mit Ausnahme in diejenige Richtung von der die Vorwärtsmeldung V übertragen wurde.

Wird über diesen Transitknoten ein Verbindung aufgebaut, so bleibt die Vorwärtsmeldung V so lange im Knoten gespeichert, bis das Gespräch beendet ist. Die Vorwärtsmeldung V wird dann durch die Auslösemeldung wieder gelöscht.

Wird über den Transitknoten eine negative Rückmeldung übertragen, d.h. es kann keine Verbindung zum B-Teilnehmer aufgebaut werden, weil dieser besetzt ist oder das Bündel von Verbindungsleitungen blockiert ist, so wird die Vorwärtsmeldung V gelöscht und das Zeitglied zurückgesetzt.

Für den Fall, daß über den Knoten keine Verbindung aufgebaut wurde, wird die gespeicherte Vorwärtsmeldung V nach Ablauf der Verzögerung des Zeitglieds wieder gelöscht.

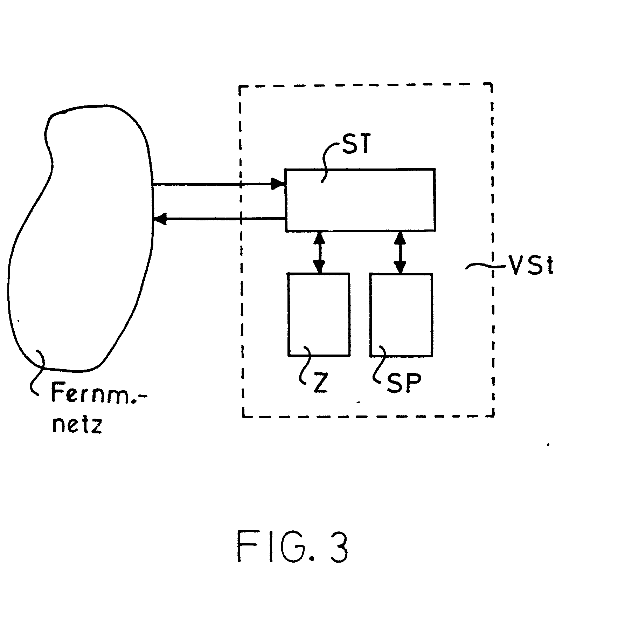

Fig. 3 zeigt eine Ausführungsform für eine Schaltungsanordnung zur Durchführung des erfindungsgemäßen Verfahrens. In der Vermittlungsstelle VSt sind das Zeitglied Z, der Speicher SP und die Steuereinrichtung ST angeordnet. Die Steuereinrichtung ST steht mit dem Fernmeldenetz über in Fig. 3 nicht dargestellter Einrichtungen in Verbindung. Das Zeitglied Z, welches mit der Steuereinrichtung ST verbunden ist, wird von dieser gestartet oder zurückgesetzt. Weiterhin ist die Steuereinrichtung ST mit dem Speicher SP verbunden. Mittels der Steuereinrichtung ST wird unter Durchführung des erfindungsgemäßen Verfahrens die zuerst eintreffende Verbindungsaufbaumeldung gespeichert und auch wieder gelöscht.

## Ansprüche

1. Wegeauswahlverfahren in einem Fernmeldenetz mit über Verbindungsleitungen miteinander verbundenen Vermittlungsstellen, bei dem, wenn der gerufene Teilnehmer einer anderen Vermittlungsstelle zugeordnet ist, ausgehend von der Vermittlungsstelle des rufenden Teilnehmers Verbindungsaufbaumeldungen zu allen an die Vermittlungsstelle angeschlossenen Vermittlungsstellen übertragen und dort gespeichert werden, dadurch gekennzeichnet, daß in allen Vermittlungsstellen beim Eintreffen einer Verbindungsaufbaumeldung ein Zeitglied gestartet wird, daß nach Ablauf der Verzögerungszeit des Zeitglieds die gespeicherte Verbindungsaufbaumeldung gelöscht wird und daß in der Vermittlungsstelle des gerufenen Teilnehmers nur die zuerst eintreffende Verbindungsaufbaumeldung für die Herstellung einer Verbindung zur rufenden Teilnehmerstelle herangezogen wird.

2. Wegeauswahlverfahren nach Anspruch 1, dadurch gekennzeichnet, daß die während der Verzögerungszeit nach der ersten Verbindungsaufbaumeldung eintreffenden weiteren Verbindungsaufbaumeldungen nicht gespeichert werden.

3. Schaltungsanordnung zur Durchführung des Verfahrens nach Anspruch 1, dadurch gekennzeichnet, daß in der Vermittlungsstelle (VSt) das Zeitglied (Z), ein Speicher - (SP) und eine Steuereinrichtung (ST), welche mit dem Fernmeldenetz über welches Meldungen übertragen werden in Verbindung steht, angeordnet sind, daß die Steuereinrichtung (ST) mit dem Zeitglied (Z) verbunden ist und dieses startet oder zurücksetzt und daß die Steuereinrichtung (ST) mit dem Speicher (SP) verbunden ist und in diesem die zuerst eintreffende Verbindungsaufbaumeldung - (V) speichert und wieder löscht.

# FIG.1

PHD 85321 EP

```
┌─────────────────────────┐
│ Vorwärtsmeldung·V        │
│ in Vermittlungsstelle    │
│ eingetroffen             │
└─────────────────────────┘
            │
            ▼
    ┌──────────────┐
    │ Speichern der│
    │      V       │
    └──────────────┘
            │
            ▼
         ◇ V           ja
      bereits  ──────────────────────────────────────┐
      vorhanden ?                                     │
            │                                         │
          nein                                        │
            │                                         │
            ▼                                         │
      ◇ Gibt es                                       │
      benachbarte          nein                       │
      Vermittlungs- ──────────────────────────────┐  │
      stellen ?                                    │  │
            │                                      │  │
           ja                                      │  │
            ├──────────────────────┐              │  │
            ▼                      ▼              │  │
    ┌──────────────┐      ┌──────────────────┐    │  │
    │ Starten des  │      │ V zu benachbarten│    │  │
    │ Zeitglieds   │      │ Vermittlungsstellen│  │  │
    └──────────────┘      └──────────────────┘    │  │
            │                                      │  │
            ▼◄─────────────────────────────────┐  │  │
      ◇ Verzögerung            nein            │  │  │
      abgelaufen ? ──────►◇ positive ───────────┘  │  │
            │         nein   Rückmeldung           │  │
           ja                R ?                    │  │
            │                 │ja                   │  │
            │                 ▼                     │  │
            │       ┌──────────────────┐            │  │
            │       │ Zeitglied stoppen│            │  │
            │       │ Warten bis Auslöse│           │  │
            │       │ meldung          │            │  │
            │       └──────────────────┘            │  │
            │                 │◄────────────────────┘  │
            ▼◄────────────────┴───────────────────────┘
    ┌──────────────┐
    │ Löschen der V│
    └──────────────┘
```

**FIG. 2**

PHD 85321 EP

ST

VSt

Z    SP

Fernm.-
netz

# FIG. 3

PHD 85321 EP